# EUROPÄISCHE PATENTANMELDUNG

(11) **EP 3 064 646 A1**
(43) Veröffentlichungstag der Anmeldung: **07.09.2016**
(21) Anmeldenummer: 16000874.4
(22) Anmeldetag: 10.02.2016
(51) Int. Cl.: E01C 19/48, E01C 19/00, E01C 23/00

(54) **STRASSENBAUMASCHINE UND VERFAHREN ZUM BETREIBEN EINER SELBSTFAHRENDEN STRASSENBAUMSCHINE**

(30) Priorität: 04.03.2015 DE 102015002692
(71) Anmelder: Dynapac GmbH, 26203 Wardenburg (DE)
(72) Erfinder: Mooren, Axel, 26209 Hatten-Sandkrug (DE); Lürding, Eberhard, 26209 Hatten (DE); Bittar, Christian, 26129 Oldenburg (DE)
(74) Vertreter: Möller, Friedrich

(57) **Zusammenfassung**

Straßenbaumaschinen, insbesondere Straßenfertiger (10), Beschicker oder Straßenfräse, dienen der Herstellung von Straßenbelägen. Aufgrund der Größe und der Geometrie des Straßenfertigers (10), des Beschickers oder der Straßenfräse ist die Sicht der Bedienperson aus dem Bedienstand (19) auf das Umfeld (27) der Straßenbaumaschine stark eingeschränkt. Es sind Systeme bekannt, bei denen Bereiche, die schlecht eingesehen werden können, durch Kameras aufgenommen und durch Anzeigegeräte im Bedienstand dargestellt werden. Allerdings wird hierdurch immer nur ein begrenzter Bereich dargestellt, so dass das Umfeld der Straßenbaumaschine für die Bedienperson unübersichtlich bleibt. Die Erfindung schafft eine Straßenbaumaschine mit einem Kamerasystem, das eine zusammenhängende Draufsicht auf das gesamte Umfeld (27) der Straßenbaumaschine erstellt.

## Beschreibung

Die Erfindung betrifft eine Straßenbaumaschine gemäß dem Oberbegriff des Anspruchs 1 sowie ein Verfahren zum Betreiben einer selbstfahrenden Straßenbaumaschine gemäß dem Oberbegriff des Anspruchs 5.

Straßenbaumaschinen, insbesondere Straßenfertiger, Beschicker oder Straßenfräsen dienen der Herstellung von Straßenbelägen aus vorzugsweise Asphalt (Schwarzdecken), aber auch Beton. Derartige üblicherweise selbstfahrende Straßenfertiger verfügen in Einbau-richtung gesehen hinter einem Fahrwerk über eine Einbaubohle. Durch diese Einbaubohle wird das Straßenbaumaterial eingebaut. Des Weiteren weist der Straßenfertiger bzw. Beschicker ein Fahrwerk auf, durch das sich der Straßenfertiger bzw. Beschicker fort-bewegt. Üblicherweise sind Straßenfertigern, Beschickern bzw. Straßenfräsen ein Bedienstand zugeordnet, von der aus eine Bedienperson die Straßenbaumaschine steuert.

Aufgrund der Größe und der Geometrie einer Straßenbaumaschine ist die Sicht der Bedienperson aus dem Bedienstand auf das Umfeld der Straßenbaumaschine stark eingeschränkt. Es sind Systeme bekannt, bei denen Bereiche, die schlecht eingesehen werden können, durch Kameras aufgenommen und durch Anzeigegeräte im Bedienstand dargestellt werden. Allerdings wird hierdurch immer nur ein begrenzter Bereich des Umfelds dargestellt, so dass das Umfeld der Straßenbaumaschine für die Bedienperson unübersichtlich bleibt. Insbesondere wenn sich Personen im Umfeld der Straßenbaumaschine aufhalten, ist dies durch die Bedienperson nur schwer kontrollierbar. Besonders auf Baustellen, auf denen es aufgrund der Vielzahl von Maschinen sehr laut sein kann, ist es wesentlich, dass die Bedienperson einer Straßenbaumaschine das Umfeld der kompletten Maschine, die sie bedient, mit einem Blick erfassen kann. Dies ist nicht nur vorteilhaft für die Sicherheit des Baustellenpersonals, es schafft auch Vorteile für den Einbau des Straßenbaumaterials.

Der Erfindung liegt daher die Aufgabe zu Grunde, eine Straßenbaumaschine, insbesondere einen Straßenfertiger, einen Beschicker oder eine Straßenfräse, und ein Verfahren zum Betreiben einer selbstfahrenden Straßenbaumaschine, insbesondere eines Straßenfertigers, eines Beschickers oder einer Straßenfräse zu schaffen, mit der der Einbau des Straßenbaumaterials sicherer und einfacher wird.

Eine Straßenbaumaschine zur Lösung der eingangs genannten Aufgabe weist die Merkmale des Anspruchs 1 auf. Somit besteht die Erfindung darin, dass ein der Straßenbaumaschine zugeordnetes Kamerasystem mehrere Kameras und eine Recheneinheit aufweist. Die mindestens vier Kameras sind jeweils einer Seite der Straßenbaumaschine zugeordnet. Die Recheneinheit fügt die durch die Kameras aufgenommenen Bilder zu einer zusammenhängenden Draufsicht auf das gesamte Umfeld der Straßenbaumaschine zusammen und stellt diese Draufsicht bzw. diese Panoramaansicht oder topview auf einem Anzeigegerät dar. Bei den Kameras kann es sich beispielsweise um Fotokameras mit geeigneten Objektiven handeln, die in einer bestimmten Frequenz Fotos erstellen und diese an die Recheneinheit über ein Kabel oder kabellos übertragen. Alternativ ist es außerdem vorgesehen, dass es sich bei den Kameras um Videokameras handelt, die kontinuierlich das Umfeld der Straßenbaumaschine filmen. Des Weiteren ist es außerdem denkbar, dass es sich bei den Kameras um Nachtsichtgeräte, insbesondere Infrarotkameras handelt, die das Umfeld der Straßenbaumaschine auch bei schlechten Sichtverhältnissen, insbesondere nachts oder bei starker Staubbildung, abbildet. Durch eine derartige Draufsicht bzw. Panoramaansicht und Darstellung derselben auf einem Anzeigegerät bzw. Display kann das gesamte Umfeld des Straßenfertigers mit einem Blick der Bedienperson eingesehen und kontrolliert werden.

Bevorzugt sieht es die Erfindung weiter vor, dass alle Kameras in einer bestimmten Höhe, vorzugsweise der gleichen Höhe der Straßenbaumaschine zugeordnet sind, insbesondere einem Bedienstand zugeordnet sind. Für eine optimale Darstellung des Umfeldes der Straßenbaumaschine sind die Kameras an einem möglichst hohen Ort der Straßenbaumaschine anzubringen. Des Weiteren ist es wesentlich, dass die Kameras auf einer ähnlichen Höhe angebracht werden, damit die Einzelaufnahmen durch die Recheneinheit ohne Verzerrungen zusammengefügt werden können. Es ist jedoch auch denkbar, dass die Kameras in unterschiedlichen Höhen an der Straßenbaumaschine angebracht werden und eventuelle Verzerrungen durch die Recheneinheit nachträglich behoben werden. Durch die Installation der Kameras am Bedienstand erhält die Bedienperson durch die erstellte Draufsicht die gleiche Vorstellung, als wenn er direkt auf das Umfeld blicken würde. Diese lebensnahe Darstellung des Umfeldes erleichtert der Bedienperson die Orientierung und somit die Steuerung des Straßenbaufahrzeuges.

Insbesondere sieht es die Erfindung weiter vor, dass der Recheneinheit ein Display zugeordnet ist zur direkten Abbildung des gesamten Umfeldes der Straßenbaumaschine. Es ist jedoch auch denkbar, dass der Recheneinheit mehrere Displays zur Darstellung des Umfeldes zugeordnet sind. Insbesondere ist es denkbar, dass jeder Kamera ein Display zugeordnet ist, welches derart angeordnet ist, dass er der Bedienperson das gleiche Raumgefühl vermittelt, als wenn sie direkt auf das Umfeld blicken würde. Des Weiteren ist es denkbar, dass die Recheneinheit Mittel aufweist zur Übertragung, insbesondere kabellosen Übertragung der ermittelten Bilddaten an beispielsweise eine Zentrale oder eine Handbedienungseinrichtung, die eine Bedienperson abseits der Straßenbaumaschine für eine Fernsteuerung der Straßenbaumaschine mit sich führt. Dadurch würde der Bedienperson eine Ansicht vermittelt werden, die mit derjenigen identisch ist, die sie vom Bedienstand aus hätte. Durch eine derartige kabellose Übertragung der Bilddaten könnten somit mehrere Straßenbaufahrzeuge zentral gesteuert werden, wobei gleichzeitig die Sicherheit des Baustellenpersonals gewährleistet wäre.

Die Erfindung sieht es weiter vor, dass der Recheneinheit weitere Kameras zugeordnet sind, zur Abbildung von verdeckten Bereichen, insbesondere schwer einzusehenden Bereichen. Zusätzlich zu den zuvor genannten Kameras, die dem Bedienstand zugeordnet sind, können zusätzliche Kameras, beispielsweise der Einbaubohle oder einem Materialdepot oder dergleichen, zugeordnet sein. Auch diese Bilder können von dem Display angezeigt werden. Dazu ist entweder zwischen den verschiedenen Ansichten zu wechseln oder dem Bedienstand sind mehrere Displays zugeordnet, die die verschiedenen Bereiche des Umfeldes gleichzeitig darstellen.

Ein Verfahren zur Lösung der Eingangs genannten Aufgabe weist die Maßnahmen des Anspruchs 5 auf. Demnach ist es vorgesehen, dass das Umfeld der Straßenbaumaschine durch mehrere Kameras aufgenommen wird und durch eine Recheneinheit zu einer zusammenhängenden Draufsicht bzw. Panoramaansicht oder topview des gesamten Umfeldes der Straßenbaumaschine zusammengefügt und dargestellt wird. Das Zusammenfügen bzw. die Darstellung der Einzelaufnahmen erfolgt dermaßen, dass der Überlapp der Bilder minimiert ist und eine möglichst reale, dass heißt, verzerrungsfreie Darstellung erzeugt wird.

Bevorzugt kann es die Erfindung weiter vorsehen, dass die gesamte Draufsicht durch die Recheneinheit direkt und ohne Zeitverzögerung auf einem dem Straßenfertiger, dem Beschicker oder der Straßenfräse zugeordneten Display dargestellt wird, vorzugsweise kabellos auf eine weitere Darstellungseinrichtung übertragen wird. Insbesondere sieht es die Erfindung vor, dass die durch die Kameras aufgenommene Draufsichten von der Recheneinheit ausgewertet wird, insbesondere die Helligkeit und/oder der Kontrast gemäß vorzugebenen Werten optimiert und/oder nach vorbestimmten Mustern, insbesondere Personen untersucht wird. Stellt die Recheneinheit beispielsweise fest, dass die Aufnahme der Kameras zu dunkel ist, kann die Empfindlichkeit der Kamera erhöht werden und/oder alternativ der entsprechende Bereich des Umfeldes durch ein Leuchtmittel, wie beispielsweise ein Flutlicht, ausgeleuchtet werden. Des Weiteren ist es erfindungsgemäß vorgesehen, dass der Recheneinheit verschiedene vorbestimmte Muster aufgespielt werden können, wie beispielsweise Hindernisse wie Mauern, Steine, Wasser oder Fahrzeuge und Personen. Bei der Identifizierung derartiger Muster erzeugt die Recheneinheit ein Signal, insbesondere ein Warnsignal, das optisch und/oder akustisch sein kann. Gegebenenfalls, kann beispielsweise bei Erkennung einer Person im Umfeld der Betrieb der Straßenbaumaschine ausgesetzt werden. Somit ist es nicht unbedingt notwendig, dass die Bedienperson ständig das Display bzw. das Umfeld der Straßenbaumaschine im Blick hat.

Des Weiteren kann es erfindungsgemäß vorteilhaft sein, wenn die Umrisse der Straßenbaumaschine in die Draufsicht des Umfeldes für eine verbesserte Orientierung der Bedienperson integriert werden. Das ist insbesondere hilfreich für die Bedienperson, um das dargestellte Umfeld besser interpretieren zu können. Des Weiteren ist es vorgesehen, dass die aufgenommenen Bilder bzw. die aufgenommenen Videosequenzen von der Recheneinheit gespeichert werden. Die gespeicherten Daten können später zur Rekonstruktion abgespielt bzw. ausgewertet werden. Dadurch wird eine Dokumentation der Bedingungen des Umfeldes der Straßenbaumaschinen während des Herstellungsprozesses erstellt. Insbesondere bei Personenschäden lässt sich im Nachhinein feststellen, wie es zu diesem Schaden kam. Das zuvor beschriebene Kamerasystem mit den Kameras und der Recheneinheit ist dermaßen ausgebildet, dass es auch nachträglich an Straßenbaumaschinen installiert werden kann.

Ein bevorzugtes Ausführungsbeispiel der Erfindung wird nachfolgend anhand der Zeichnung näher erläutert. In dieser zeigen:
- Fig. 1: eine Seitenansicht eines Straßenfertigers mit einem Kamerasystem, und
- Fig. 2: eine Draufsicht auf einen schematisierten Straßenfertiger mit dem Kamerasystem.

In den Fig. ist beispielhaft ein Straßenfertiger 10 dargestellt. Die hier dargestellte Erfindung ist jedoch nicht auf Straßenfertiger beschränkt, sondern ist vielmehr auf jede Straßenbaumaschine, insbesondere auch auf Beschicker oder Straßenfräsen anzuwenden.

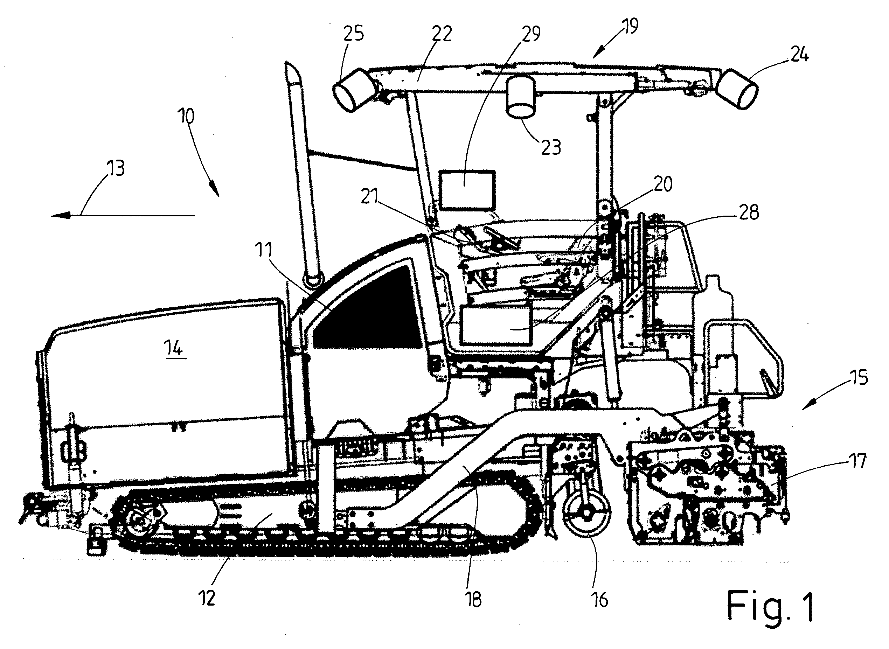

Der in Fig. 1 dargestellte Straßenfertiger 10 dient der Herstellung von Straßenbelägen. Bevorzugt dient der Straßenfertiger 10 der Herstellung von sogenannten Schwarzdecken, nämlich Straßenbelägen aus Asphalt. Der Straßenfertiger 10 kann aber auch zur Herstellung von Straßenbelägen aus anderen Materialien, z. B. Beton, eingesetzt werden.

Der Straßenfertiger 10 ist selbstfahrend ausgebildet. Dazu verfügt der Straßenfertiger 10 über eine zentrale Antriebseinheit 11, die beispielsweise einen Verbrennungsmotor aufweist, der Hydraulikpumpen zur Versorgung von Hydraulikmotoren und gegebenenfalls einen Generator zur Erzeugung von Energie für elektrische Antriebe oder Heizungen aufweist.

Der Straßenfertiger 10 verfügt im Übrigen über ein Fahrwerk, dass im gezeigten Ausführungsbeispiel als ein Raupenfahrwerk ausgebildet ist. Der Straßenfertiger 10 kann aber auch mit einem Radfahrwerk ausgestattet sein. Das Fahrwerk 12 wird von der Antriebseinheit 11 derart angetrieben, dass sich der Straßenfertiger zur Herstellung des Straßenbelags in Fertigungsrichtung 13 fortbewegt.

In Fertigungsrichtung 13 gesehen ist vor dem Fahrwerk 12 ein wannen- bzw. muldenartig ausgebildeter Vorratsbehälter 14 angeordnet. Der Vorratsbehälter 14 nimmt einen Vorrat des zur Herstellung des Straßenbelags dienenden Materials, im gezeigten Ausführungsbeispiel heißen Asphalt, auf. Durch ein beispielsweise als Kratzerförderer ausgebildetes Förderorgan wird das noch heiße Straßenbaumaterial vom Vorratsbehälter 14 entgegen der Fertigungsrichtung 13 zum hinteren Ende 15 des Straßenfertigers 10 transportiert. Das hintere Ende 15 des Straßenfertigers 10 befindet sich in Fertigungsrichtung 13 gesehen hinter dem Fahrwerk 12 und der Antriebseinheit 11.

Am hinteren Ende 15 des Straßenfertigers 10 sind eine Verteilerschnecke 16 und mit Abstand dahinter eine Einbaubohle 17 angeordnet. Die Verteilerschnecke 16 und die Einbaubohle 17 sind auf- und abbewegbar. Zu diesem Zweck sind die Einbaubohle 17 und die Verteilerschnecke 16 an Tragarmen 18 angehängt. Die Tragarme 18 sind schwenkbar am Fahrwerk 12 des Straßenfertigers 10 gelagert. Hydraulikzylinder oder dergleichen verschwenken die Tragarme 18, um die Einbaubohle 17, und vorzugsweise auch die Verteilerschnecke 16, anzuheben bzw. abzusenken.

Der hier dargestellte Straßenfertiger 10 wird von einem Bedienstand 19 durch eine nicht dargestellte Bedienperson betrieben. Der Bedienstand 19 weist einen Sitz 20 sowie eine Lenkeinrichtung 21 auf. Der Bedienstand 19 weist des Weiteren ein Dach 22 auf, dem gemäß Fig. 1 vier Kameras 23, 24, 25, 26 zugeordnet sind (Kamera 26 ist aus perspektivischen Gründen verdeckt). Die Kameras 23, 24, 25, 26 sind jeweils einer Seite des Daches 22 derart zugeordnet, dass sie jede Seite des Straßenfertigers 10 bzw. das Umfeld 27 abdecken. Des Weiteren ist dem Bedienstand 19 eine Recheneinheit 28 zugeordnet (hier nur schematisch dargestellt). Diese Recheneinheit 28 verarbeitet die durch die Kameras 23 bis 26 aufgenommenen Bilder bzw. Videosequenzen und stellt sie auf einem, ebenfalls dem Bedienstand 19, zugeordneten Display 29 dar. Das Display 29 ist hier ebenfalls nur schematisch dargestellt und ist nicht auf die gezeigte Form bzw. Anordnung eingeschränkt.

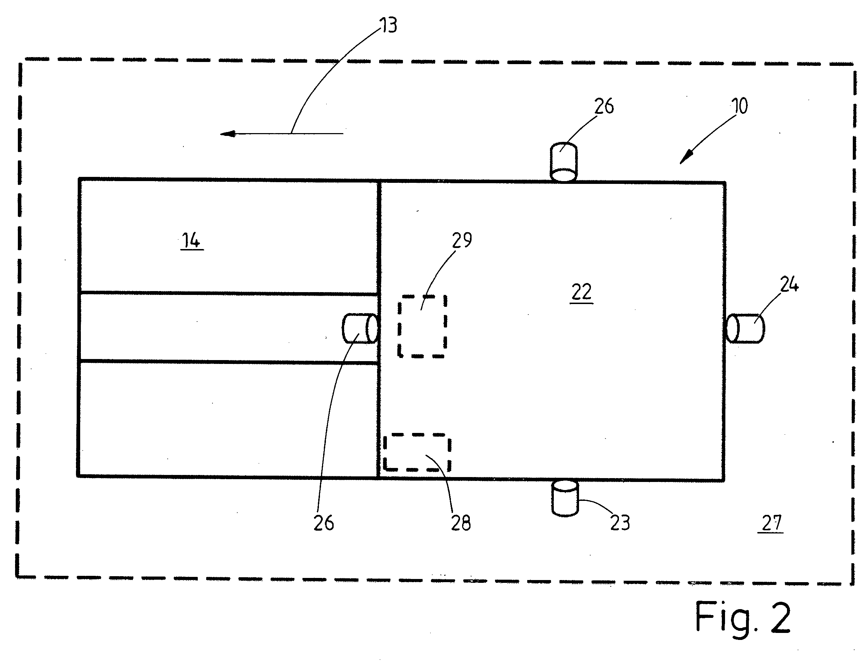

In der Fig. 2 ist eine Draufsicht auf einen schematisierten Straßenfertiger 10 bzw. des Daches 22 und des Vorratsbehälters 14 dargestellt. Dem Dach 22 ist an jeder Seite jeweils eine Kamera 23 bis 26 zugeordnet. Ebenfalls schematisch dargestellt sind die Recheneinheit 28 und das Display 29.

Über die Kameras 23 bis 26 lässt sich das gesamte direkte Umfeld 27 um den Straßenfertiger 10 herum lückenlos aufnehmen. Die Recheneinheit 28 bearbeitet die aufgenommenen Bilder bzw. Videosequenzen derart, dass durch das Display 29 das Umfeld 27 als Draufsicht des Straßenfertigers 10 bzw. Panoramaansicht oder topview lückenlos dargestellt wird. Somit ist für die Bedienperson des Straßenfertigers 10 über das Display 29 jeder Bereich des Umfeldes 27 des Straßenfertigers 10 einsehbar.

Es ist erfindungsgemäß außerdem vorgesehen, dass dem Straßenfertiger 10 weitere Kameras zugeordnet sind, durch die insbesondere schwer einsehbare Bereiche des Umfeldes 27 dargestellt werden.

Durch die Recheneinheit 28 lassen sich die aufgenommenen Bilder bzw. Videosequenzen auf mögliche Hindernisse oder Personen durchsuchen und gegebenenfalls ein Warnsignal erzeugen. Dadurch wird die Betriebssicherheit aber auch die Herstellungsqualität verbessert.

### Bezugszeichenliste:

- 10: Straßemfertiger
- 11: Antriebseinheit
- 12: Fahrwerk
- 13: Fertigungsrichtung
- 14: Vorratsbehälter
- 15: hinteres Ende
- 16: Verteilerschnecke
- 17: Einbaubohle
- 18: Tragarm
- 19: Bedienstand
- 20: Sitz
- 21: Lenkeinrichtung
- 22: Dach
- 23: Kamera
- 24: Kamera
- 25: Kamera
- 26: Kamera
- 27: Umfeld
- 28: Recheneinheit
- 29: Display

## Patentansprüche

1. Straßenbaumaschine, insbesondere Straßenfertiger (10), Beschicker oder Straßenfräse mit einem Fahrwerk (12), mindestens einem Aufbau und einem Kamerasystem zur Darstellung eines Umfeldes (27) der Straßenbaumaschine, **dadurch gekennzeichnet, dass** das Kamerasystem mehrere Kameras (23, 24, 25, 26) und eine Recheneinheit (28) aufweist, wobei die Kameras (23, 24, 25, 26) jeweils einer anderen Seite der Straßenbaumaschine zugeordnet sind und die Recheneinheit (28) die durch die Kameras (23, 24, 25, 26) aufgenommenen Bilder zu einer zusammenhängenden Draufsicht auf das gesamte Umfeld (27) der Straßenbaumaschine zusammenfügt und darstellt.

2. Straßenbaumaschine nach Anspruch 1, **dadurch gekennzeichnet, dass** das Kamerasystem mindestens vier Kameras (23, 24, 25, 26) aufweist, die in einer bestimmten Höhe, vorzugsweise der gleichen Höhe der Straßenbaumaschine zugeordnet sind, insbesondere einem Bedienstand (19) zugeordnet sind.

3. Straßenbaumaschine nach einem der Ansprüche 1 oder 2, **dadurch gekennzeichnet, dass** der Recheneinheit (28) ein Display (29) zugeordnet ist zur direkten Abbildung des gesamten Umfeldes (27) der Straßenbaumaschine.

4. Straßenbaumaschine nach einem der vorherigen Ansprüche, **dadurch gekennzeichnet, dass** der Recheneinheit (28) weitere Kameras zugordnet sind, zur Abbildung von verdeckten Bereichen, insbesonders schwer einzusehenden Bereichen.

5. Verfahren zum Betreiben einer selbstfahrenden Straßenbaumaschine, insbesondere Straßenfertiger (10), Beschicker oder Straßenfräse mit einem Fahrwerk (12), mindestens einem Aufbau und einem Kamerasystem zur Darstellung eines Umfeldes (27) der Straßenbaumaschine, **dadurch gekennzeichnet, dass** das Umfeld (27) durch mehrere Kameras (23, 24, 25, 26) aufgenommen wird und durch eine Recheneinheit (28) zu einer zusammenhängenden Draufsicht des gesamten Umfelds (27) der Straßenbaumaschine zusammengefügt und dargestellt wird.

6. Verfahren nach Anspruch 5, **dadurch gekennzeichnet, dass** die gesamte Draufsicht durch die Recheneinheit (28) direkt und ohne Zeitverzögerung auf einem der Straßenbaumaschine zugeordneten Display (29) dargestellt wird, vorzugsweise kabellos auf eine weitere Darstellungseinrichtung übertragen wird.

7. Verfahren nach Anspruch 5 oder 6, **dadurch gekennzeichnet, dass** die durch die Kameras (23, 24, 25, 26) aufgenommene Draufsicht von der Recheneinheit (28) ausgewertet wird, insbesondere die Helligkeit und/oder der Kontrast gemäß vorzugebenden Werten optimiert und/oder nach vorbestimmten Mustern, insbesondere Personen untersucht wird.

8. Verfahren nach einem der Ansprüche 5 bis 7, **dadurch gekennzeichnet, dass** durch die Recheneinheit (28) ein Signal erzeugt wird, falls sich eine Person im Umfeld (27) der Straßenbaumaschine befindet, insbeondere der Betrieb der Straßenbaumaschine unterbrochen wird.

9. Verfahren nach einem der Ansprüche 5 bis 8, **dadurch gekennzeichnet, dass** die gesamte Draufsicht zur Koordinierung kabellos an weitere Geräte, vorzugsweise Baufahrzeuge übertragen wird.

10. Verfahren nach einem der Ansprüche 5 bis 9, **dadurch gekennzeichnet, dass** die Umrisse der Straßenbaumaschine in der Draufsicht des Umfeldes (27) zur Orientierung dargestellt werden.
